# EUROPEAN PATENT SPECIFICATION

(11) **EP 2 738 639 B1**
(45) Date of publication and mention of the grant of the patent: **19.11.2014**
(21) Application number: 12008082.5
(22) Date of filing: 03.12.2012
(51) Int. Cl.: G05D 23/01, F24D 19/10

(54) **Thermostatic valve actuator**
Thermostatisches Ventilstellglied
Actionneur de soupape thermostatique

(43) Date of publication of application: 04.06.2014
(73) Proprietor: Danfoss A/S, 6430 Nordborg (DK)
(72) Inventor: Clausen, Anders Østergaard, 8680 Ry (DK)
(74) Representative: Knoblauch, Andreas

(56) References cited:
- EP-A2- 0 044 904
- EP-A2- 0 239 753
- EP-A2- 0 903 525
- WO-A1-94/29623
- DE-A1- 2 064 019
- DE-A1-102004 032 517

## Description

The invention relates to a thermostatic valve actuator having set means for adjusting a set temperature, a temperature scale, a reference symbol, a frost protection symbol, said temperature scale and said reference symbol being movable relative to each other by a movement of said set means and wherein one of said temperature scale and said reference symbol is adjustable with respect to said set means.

A thermostatic valve actuator of this kind is used to control directly or indirectly the flow of a heating medium through a radiator. The radiator influences the temperature in a room. The set means are used for adjusting a set temperature of said room. The temperature scale helps to choose the right set temperature.

However, some people tend to compare the temperature indicated by the position of the temperature scale and the reference symbol relative to each other with the temperature of the room shown by something else, e.g. a digital display showing the measured room temperature.

In some cases, the actual temperature in the room is not the same as the set temperature indicated by the temperature scale and the reference symbol. This makes some people feel uncomfortable.

When the actual room temperature shown by a thermometer or the like is for example 20°C and the reference symbol points to 21°C on the temperature scale, people have the feeling that the room is too cold. In such a situation, the relative position of the temperature scale and the reference symbol can be adjusted so that the reference symbol points to 20°C on the temperature scale. Although the physical conditions of the room have not been changed, people have a more comfortable feeling.

DE 20 64 019 A1 relates to a thermostatic valve actuator. The actuator comprises an adjusting handle. The part of the adjusting handle adjacent to a valve is formed as a tapered bevel. The latter comprises an adjusting scale on its outer surface in the form of number or temperature labels. A ring is imposed on the adjusting handle. The ring comprises a tapered ring part and an adjacent cylindrical part. The tapered ring part bears on the tapered bevel on the adjusting handle. The tapered ring part comprises a window revealing the adjusting scale. The inside of the adjusting handle comprises a brake spring which abuts against the inner surface of a head of the adjusting handle. In order to correlate a certain number or temperature label with the actual room temperature, the adjusting handle is pressed against the force of the brake spring and the ring is removed. The position of the window can then be adjusted with respect to the adjusting handle to show the desired label.

EP 0 903 525 A2 relates to a control device for thermostatic valves. The thermostatic control device comprises a control knob. The knob shows a scale as well as a first reference mark. The part of the control knob adjacent to a screwable ring supports a control ring. The latter is supported in a rotatable and axially slideable manner by the knob and comprises a second reference mark. The thermostatic control device also comprises a reference marker. The alignment of said reference marks corresponds to a condition in which the control knob is able to perform a rotation over the entire adjustment range. Put another way, it can be rotated between a position in which the valve is closed and a position in which the valve is fully open. It is possible to set the control device so as to allow rotation of the knob in a temperature range between Zero (the valve being closed) and a predefined value on the scale (the valve being open, but not fully open). For this purpose, the knob is rotated until the predefined value on the scale is aligned with the reference marker. The ring is disengaged from the knob, being displaceable forwards until it comes up against the support of the marker. Then, the ring is rotated in an anti-clockwise direction until a tooth comes into abutment against a projection. The calibration is completed and the knob can only be rotated between Zero (the valve being closed) and a predefined value on the scale (the valve being open, but not fully open). Thermostatic regulation is thus possible between different predetermined temperature values.

EP 0 044 904 A2 relates to a thermostat for regulating a radiator valve. The thermostat comprises a mounting base. The part of the mounting base adjacent to a clamping collar comprises a temperature scale. An adjusting knob is screwed onto the mounting base. A bottom area of the mounting base comprises longitudinal grooves distributed radially around its circumference. These grooves receive two limitation sheets. The two limitation sheets delimit the screwing range of the adjusting knob. As each of the longitudinal grooves corresponds to a certain temperature, insertion of the two limitation sheets into the appropriate grooves determines the lowermost and uppermost selected temperature value. A thermostatic regulation is thus possible between different predetermined temperature values.

EP 0 239 753 A2 relates to a radiator valve incorporating presetting means. The presetting means are operated via an adjustment knob which has an adjustment scale and a handle. The adjustment knob is placed on top of a pre-adjustment spindle and screw bushing, the adjustment scale being fixed in relation to a marking on the pre-adjustment spindle. Once the adjustment knob is screwed on top of the pre-adjustment spindle, arbitrary adjusting devices, e.g. a thermostat or a hand knob, cannot be screwed onto a thread connection. By means of the handle the pre-adjustment spindle is turned to a desired position, which is read on scale against index of the valve body. As the pre-adjustment spindle comprises a veil which shields a large or small portion of heating fluid passing the valve, a pre-adjustment of the amount of heating fluid passing the valve is achieved.

DE 10 2004 032 517 A1 relates to a thermostat. The thermostat comprises an adjustment handle with a scale for adjusting a selected temperature value. Furthermore, it comprises a fixed body with an index corresponding to the scale. In order to change the look of the body, a casing is mounted on the body. Said casing may also comprise an index and it may be moveable in an axial or circumferential direction relative to the body thereby altering a position of the index with respect to the scale.

WO 94/29623 A1 relates to a security device for a thermostat. The thermostat comprises a housing on which a rotary knob is rotatably arranged. The housing comprises a marking, the rotary knob features a value scale in the form of axially parallel marks I, II, III, IIII. The scale and the marking are moveable relative to each other by turning of the rotary knob. A desired value is adjustable within a limited range, e.g., between a position corresponding to the closed position of a valve and, e.g., the mark III corresponding to a half-open position of the valve. For this purpose, the marking, the centre line of a bridge and the desired value III on the value scale are brought into alignment. A security sleeve is mounted on the housing in a specific manner so as to allow rotation of the rotary knob only between the set values.

The object underlying the present invention is to increase comfort.

This object is solved in that said temperature scale is moveable independently from said frost protection symbol.

Many actuators have a frost protection symbol marking a position of the set means in which it is made sure that the radiator cannot freeze. In other words, when the set means is adjusted such that the frost protection symbol and the reference symbol match each other, the valve controlled by the actuator is opened when the room temperature falls below a predetermined value. This temperature should not be changed. Therefore, when the temperature scale is movable independently from the frost protection symbol, the frost protection temperature is not changed.

In a preferred embodiment, said set means comprise a turning element, said temperature scale being arranged on a support fixed on said turning element. The turning element can be a turning grip. Such a turning grip is known from many thermostatic valve actuators. By turning said turning element, the set temperature can be changed. The temperature scale is arranged on said turning element and the reference symbol is positioned on an element of the actuator which is stationary. Since the temperature scale and the turning element can be moved independently from each other, it is relatively simple to adjust the temperature scale to the actual room temperature. The support may be arranged to surround at least partly the turning element, e. g. the turning grip.

Preferably, said support is in the form of a ring, in particular a closed ring. A ring can be arranged to surround said turning element. A ring can be turned relative to said turning element. When the ring is closed, it can be easily held on the turning element without the risk that the ring is lost.

Preferably, said support is releasably locked on said turning element in a rotational direction of said turning element. When the temperature scale has been adjusted, there is no risk that this adjustment is changed by a person turning said turning element. The temperature scale is moved together with the turning element.

Preferably, said support and said turning element are connected to each other in circumferential direction by means of a positive locking. A positive locking is a simple means to fix two elements relative to each other in a predefined direction.

In this case, it is preferred that said positive locking is disengaged by a movement of the support and the turning element relative to each other in an axial direction of said turning element. When the support and the turning element have been moved relative to each other in an axial direction of the turning element, i.e. parallel to the rotational axis of the turning element, the support comes free from the turning element for a rotational movement. The support can be rotated relative to the turning element to a position in which the reference symbol points to the correct temperature on the temperature scale.

Preferably, said support rests against a stop in a locked condition, said stop being preferably in the form of a ring shaped protrusion, and being in particular flush with said support. Said stop minimizes the risk that the adjustment of the temperature scale is inadvertently changed by a person changing the set temperature by rotating the turning element. The stop allows for a precise positioning of the support of the temperature scale in axial direction. When the stop is in the form of a ring shaped protrusion the support is held not only in a small region, but can be held over the whole or at least a great part of its circumference. When the stop is flush with the support, there are no additional steps or gaps disturbing the outer appearance of the actuator.

Preferably, said support comprises a couple of inner teeth and said turning element comprises a couple of outer teeth, said inner teeth and said outer teeth together forming said positive locking. One possibility for arranging the inner teeth and the outer teeth is that the inner teeth extend radially inwardly and the outer teeth extend radially outwardly. Another possibility would be that the inner teeth and the outer teeth extend parallel to the rotational axis of the turning element in opposite directions.

In a preferred embodiment, said outer teeth are arranged in a groove in a circumferential surface of said turning element, said inner teeth extending into said groove. The groove limits the possibility of the movement of the support on the turning element in an axial direction. The support is held undetachably on said turning element, in particular when the support is formed as a closed ring. When the teeth are arranged in the groove, no additional space is required for the positive locking.

Preferably, in said axial direction said outer teeth are smaller than said groove by at least an axial length of said inner teeth. The inner teeth can be moved in rotational direction within the groove in a space existing between the outer teeth and a wall of the groove.

Preferably, said couple of inner teeth and/or said couple of outer teeth is divided in at least two groups of teeth. It is not necessary that all teeth are arranged about the whole circumference of the turning element and/or the support. In most cases it is sufficient when there are two areas each area comprising a part of the couple of teeth.

In this case it is preferred that said frost protection symbol is fixed on said turning element. This allows changing the angular position of the support relative to the turning element without changing the angular position of the frost protection symbol.

In a preferred embodiment, said frost protection symbol is positioned out of said support in the axial direction. The support does not cover the frost protection symbol so that the frost protection symbol can be seen from the outside independently of the position the support on the turning element.

In another preferred embodiment, said frost protection symbol is positioned in axial direction within said support, said support comprising a window in the area of said frost protection symbol. Although the frost protection symbol is covered by the support, it can still be seen from the outside.

Preferred embodiments of the invention will now be described in more detail with reference to the drawing, wherein:
- Fig. 1: is a perspective view of an actuator,
- Fig. 2: is a view according to Fig. 1 showing a first step of adjusting the position of a temperature scale,
- Fig. 3: shows a second step of adjusting the temperature scale,
- Fig. 4: shows a third step of adjusting the temperature scale,
- Fig. 5: shows a partly cut view of the actuator,
- Fig. 6: shows a view according to Fig. 5 with the temperature scale in another position,
- Fig. 7: shows the actuator and the temperature scale separated from each other and
- Fig. 8: shows a second embodiment of the invention.

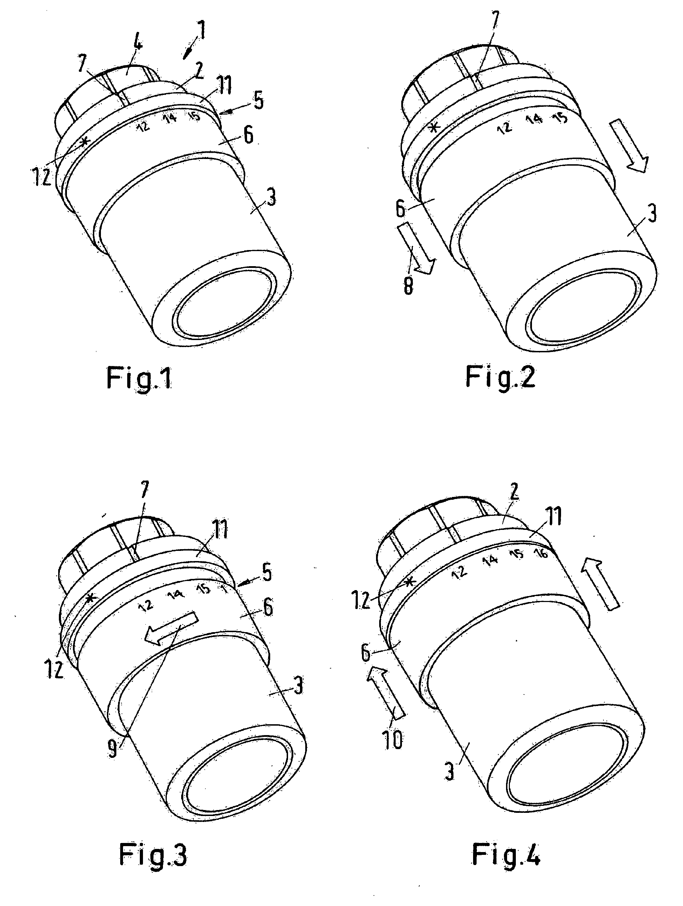

Fig. 1 shows an actuator 1 for a thermostatically controlled radiator valve having a base 2 and a turning grip 3. The turning grip 3 can be rotated with respect to the base 2 in order to adjust a set temperature of a room to be heated.

The actuator 1 can be connected to the radiator valve by means of a nut 4.

In order to facilitate the adjusting of the set temperature the turning grip 3 comprises a temperature scale 5 which is fixed in rotational direction to the turning grip 3. The temperature scale 5 is printed onto a ring 6, said ring 6 forming a support for the temperature scale 5. The ring 6 is closed in circumferential direction.

The base 2 has a reference symbol 7, for example a point or a short line. When the turning grip 3 is rotated, the temperature value of the temperature scale 5 is positioned vis-á-vis the reference symbol so that the person adjusting the set temperature can see to which temperature value the set temperature has been adjusted.

In the situation shown in fig. 1 the set temperature has been adjusted to 12°C.

However, some people tend to compare the temperature set on the actuator 1 with the temperature shown by "something else" in the same room, for example a digital display showing the measured room temperature. When for example the measured room temperature is 13°C, a person looking to the actuator 1 would be confused and would feel uncomfortable.

In order to overcome this problem, the temperature scale 5 can be adjusted with respect to the turning grip 3 as it is shown in figs. 2 to 4.

In a first step the ring 6 is moved in an axial direction (related to a rotational axis of the turning grip 3). This movement is indicated by arrows 8. Such a movement is possible without the necessity to release any kind of blocking.

In the position of the ring 6 on the turning grip 3 shown in fig. 2 it is possible to rotate the ring 6 with respect to the turning grip 3 as shown in fig. 3. The rotational movement is shown by arrow 9. The ring 6 is rotated into a position in which the "true" set value which corresponds to the actual temperature in the room is vis-á-vis the reference symbol 7. In the present case, the ring 6 has been rotated on the turning grip 3 until the value of 13°C is vis-á-vis the reference symbol 7. Since the temperature scale 5 does not contain any number 13, the ring 6 is rotated so that the middle between 12 and 14 is vis-á-vis the reference symbol 7.

In this position the ring 6 is shifted back axially as indicated by arrows 10 until the ring 6 rests against a stop 11. The stop 11 is a protrusion extending circumferentially around the turning grip 3. Preferably the said stop 11 is made in one piece with the turning grip 3.

In the position shown in figs. 1 and 4 the ring 6 is fixed on the turning grip 3 in rotational direction, i.e. it is not possible to move the temperature scale 5 on the grip 3 in circumferential direction even when the turning grip 3 is rotated. The stop 11 bears a frost protection symbol 12. The frost protection symbol 12 is outside the ring 6 in axial direction. Therefore, when the ring 6 is rotated, as shown in fig.3, the frost protection symbol 12 does not change its position on the turning grip 3 when the temperature scale 5 is adjusted. In this way, the frost protection set temperature is not changed.

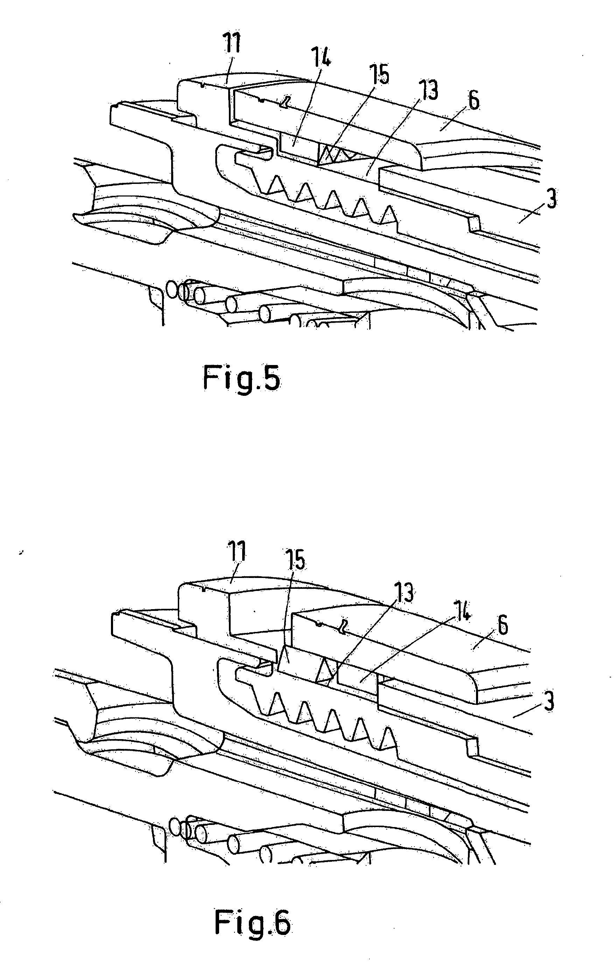

In the position of the ring 6 on the turning grip 3 shown in figs. 1 and 4, there is a positive locking between the turning grip 3 and the ring 6 in circumferential direction. This positive locking is shown in more details in figs. 5 and 6.

The turning grip 3 comprises a groove 13 on its outer circumferential surface. The turning grip 3 can be made of a number of parts which are assembled together and which are rotated together. The groove 13 can be limited by one part or by more of these parts.

The ring 6 comprises a plurality of inner teeth 14 extending radially inwardly into the groove 13. The turning grip 3 comprises a couple of outer teeth 15 extending radially outwardly. The outer teeth 15 are arranged in the groove 13. When the ring 6 is shifted to rest against stop 11, the inner teeth 14 and the outer teeth 15 mesh into another and in this way form a positive locking.

The outer teeth 15 have a length which is smaller than the width of the groove 13. The difference between the axial length of the outer teeth 15 and the width of the groove 13 corresponds at least to the axial length of the inner teeth 14. In this way, it is possible to move the inner teeth 14 completely out of engagement with the outer teeth 15 as shown in fig. 6. When the inner teeth 14 are disengaged from the outer teeth 15, it is possible to rotate the ring 6 on the turning grip 3.

Since the inner teeth 14 protrude into the groove 13, they form a stop for the movement of the ring 6 relative to the turning grip 3 in axial direction. The ring 6 is held undetachably on the turning grip 3. Since the ring 6 is closed in circumferential direction it is not possible to remove the ring 6 from the turning grip 3.

As can be seen in fig. 5 the stop 11 and the ring 6 are flush to each other, i.e. they have the same outer radius so that there are no additional steps on the outer surface of the actuator 1.

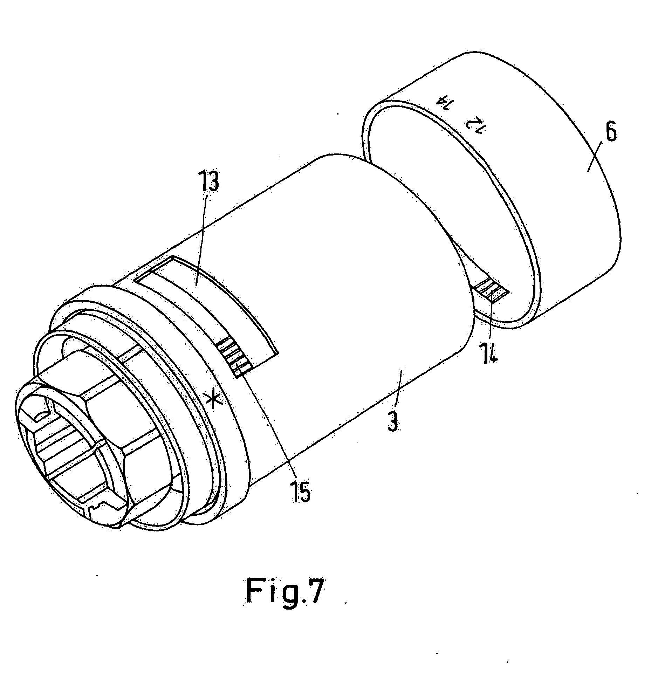

Fig. 7 shows the turning grip 3 and the ring 6 separate from each other in order to show that the groove 13 and the couple of outer teeth 15 do not extend over the entire circumference of the turning grip 3. The outer teeth 15 extend only over a part of the circumference of the turning grip 3. Preferably, there are at least two groups of outer teeth 15. In the present case, there are two groups of outer teeth 15 which are arranged in opposite sides of the turning grip 3.

In the same way, the ring 6 has two groups of inner teeth 14 which are arranged in opposite areas in the inner side of the ring 6.

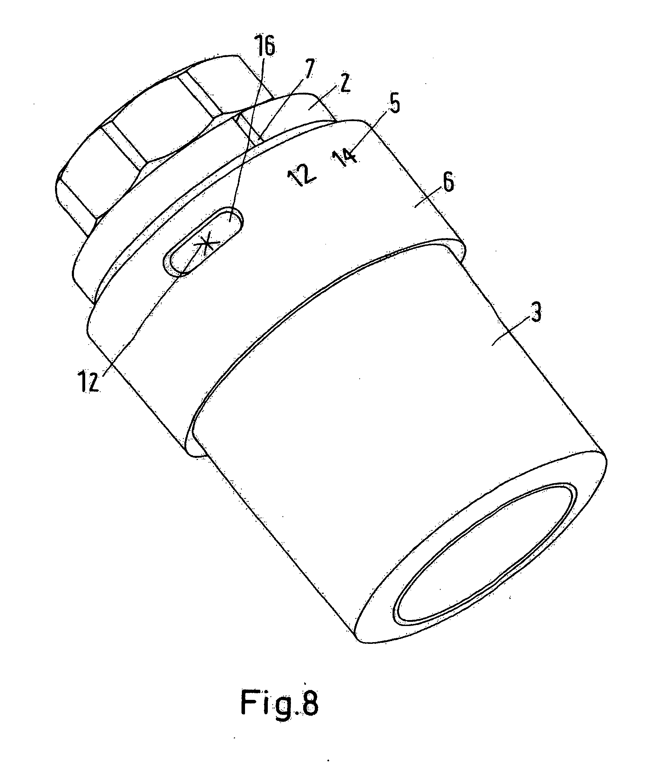

Fig. 8 shows another embodiment of the invention.

In the embodiment of figs. 1 to 7 the frost protection symbol 12 is arranged in an area out of the ring 6.

In the embodiment shown in fig. 8 the frost protection symbol 12 is arranged within the axial extension of the ring 6. However, it is still arranged fixedly on the turning grip 3.

In order to make the frost protection symbol 12 visible, the ring 6 comprises a window 16 in an area in which the frost protection symbol 12 is arranged.

In the embodiments shown the temperature scale 5 is arranged on a ring 6. However, the temperature scale 5 can be arranged on any other support, which can be adjusted with respect to the turning grip 3 or any other element. For example, the temperature scale 5 could be positioned on a carrier arranged at the front face of the turning grip 3.

In the embodiments shown in figs. 1 to 8 the said temperature is adjusted by means of a rotation of the turning grip 3. However, any other element can be used as well, for example a turning element which is not formed as grip.

## Claims

1. A thermostatic valve actuator (1) having set means for adjusting a set temperature, a temperature scale (5), a reference symbol (7) and a frost protection symbol (12), said temperature scale (5) and said reference symbol (7) being movable relative to each other by a movement of said set means and wherein one of said temperature scale (5) and said reference symbol (7) is adjustable with respect to said set means **characterized in that** said temperature scale (5) is movable independently from said frost protection symbol (12).

2. The actuator according to claim 1, **characterized in that** said set means comprise a turning element (3), said temperature scale (5) being arranged on a support (6) fixed to said turning element (3).

3. The actuator according to claim 2, **characterized in that** said support (6) is in the form of a ring, in particular a closed ring.

4. The actuator according to claim 2 or 3, **characterized in that** said support (6) is releasably locked on said turning element (3) in a rotational direction of said turning element (3).

5. The actuator according to claim 4, **characterized in that** said support (6) and said turning element (3) are connected to each other in circumferential direction by means of a positive locking.

6. The actuator according to claim 5, **characterized in that** said positive locking is disengaged by a movement of the support (6) and the turning element (3) relative to each other in an axial direction of said turning element (3).

7. The actuator according to claim 6, **characterized in that** said support (6) rests against a stop (11) in a locked condition, said stop (11) being preferably in the form of a ring shaped protrusion, and being in particular flush with said support (6).

8. The actuator according to any of claims 5 to 7, **characterized in that** said support (6) comprises a couple of inner teeth (14) and said turning element (3) comprises a couple of outer teeth (15), said inner teeth (14) and said outer teeth (15) together forming said positive locking.

9. The actuator according to claim 8, **characterized in that** said outer teeth (15) are arranged in a groove (13) in a circumferential surface of said turning element (3), said inner teeth (14) extending into said groove (13).

10. The actuator according to claim 9, **characterized in that** in said axial direction said outer teeth (15) are smaller than said groove (13) by at least an axial length of said inner teeth (14).

11. The actuator according to any of claims 8 to 10, **characterized in that** said couple of inner teeth (14) and/or said couple of outer teeth (15) is divided in at least two groups of teeth.

12. The actuator according to claim 1, **characterized in that** said frost protection symbol (12) is fixed on said turning element (3).

13. The actuator according to claim 12, **characterized in that** said frost protection symbol (12) is positioned out of said support (6) in the axial direction.

14. The actuator according to claim 13, **characterized in that** said frost protection symbol (12) is positioned in axial direction within said support (6), said support (6) comprising a window (16) in the area of said frost protection symbol (12).

## Patentansprüche

1. Thermostatisches Ventilstellglied (1) mit Einstellmitteln zum Verstellen einer Solltemperatur, einer Temperaturskala (5), einem Bezugssymbol (7) und einem Frostschutzsymbol (12), wobei die Temperaturskala (5) und das Bezugssymbol (7) durch eine Bewegung der Einstellmittel bezüglich einander beweglich sind, und wobei die Temperaturskala (5) oder das Bezugssymbol (7) bezüglich der Einstellmittel verstellbar ist, **dadurch gekennzeichnet, dass** die Temperaturskala (5) unabhängig von dem Frostschutzsymbol (12) beweglich ist.

2. Stellglied nach Anspruch 1, **dadurch gekennzeichnet, dass** die Einstellmittel ein Drehelement (3) umfassen, wobei die Temperaturskala (5) an einer an dem Drehelement (3) befestigten Stütze (6) angebracht ist.

3. Stellglied nach Anspruch 2, **dadurch gekennzeichnet, dass** die Stütze (6) die Form eines Rings, insbesondere eines geschlossenen Rings hat.

4. Stellglied nach Anspruch 2 oder 3, **dadurch gekennzeichnet, dass** die Stütze (6) in einer Drehrichtung des Drehelements (3) freigebbar an diesem Drehelement (3) verriegelt ist.

5. Stellglied nach Anspruch 4, **dadurch gekennzeichnet, dass** die Stütze (6) und das Drehelement (3) in Umfangsrichtung formschlüssig miteinander verbunden sind.

6. Stellglied nach Anspruch 5, **dadurch gekennzeichnet, dass** die formschlüssige Verbindung durch eine Bewegung der Stütze (6) und des Drehelements (3) bezüglich einander in einer Axialrichtung des Drehelements (3) ausgerückt wird.

7. Stellglied nach Anspruch 6, **dadurch gekennzeichnet, dass** die Stütze (6) in einem verriegelten Zustand an einem Anschlag (11) anliegt, wobei der Anschlag (11) vorzugsweise die Form eines ringförmigen Vorsprungs hat und insbesondere mit der Stütze (6) bündig ist.

8. Stellglied nach einem der Ansprüche 5 bis 7, **dadurch gekennzeichnet, dass** die Stütze (6) mehrere innere Zähne (14) umfasst und das Drehelement (3) mehrere äußere Zähne (15) umfasst, wobei die inneren Zähne (14) und die äußeren Zähne (15) zusammen die formschlüssige Verbindung bilden.

9. Stellglied nach Anspruch 8, **dadurch gekennzeichnet, dass** die äußeren Zähne (15) in einer Nut (13) in einer Umfangsfläche des Drehelements (3) angeordnet sind, wobei sich die inneren Zähne (14) in die Nut (13) erstrecken.

10. Stellglied nach Anspruch 9, **dadurch gekennzeichnet, dass** die äußeren Zähne (15) in der Axialrichtung um mindestens eine axiale Länge der inneren Zähne (14) kleiner als die Nut (13) sind.

11. Stellglied nach einem der Ansprüche 8 bis 10, **dadurch gekennzeichnet, dass** die mehreren inneren Zähne (14) und/oder die mehreren äußeren Zähne (15) in mindestens zwei Gruppen von Zähnen unterteilt sind.

12. Stellglied nach Anspruch 1, **dadurch gekennzeichnet, dass** das Frostschutzsymbol (12) am Drehelement (3) befestigt ist.

13. Stellglied nach Anspruch 12, **dadurch gekennzeichnet, dass** das Frostschutzsymbol (12) in der Axialrichtung aus der Stütze (6) positioniert ist.

14. Stellglied nach Anspruch 13, **dadurch gekennzeichnet, dass** das Frostschutzsymbol (12) in der Axialrichtung in der Stütze (6) positioniert ist, wobei die Stütze (6) ein Fenster (16) im Bereich des Frostschutzsymbols (12) umfasst.

## Revendications

1. Actionneur de soupape thermostatique (1) présentant des moyens prédéfinis pour ajuster une température prédéfinie, une échelle de température (5), un symbole de référence (7) et un symbole de protection contre le gel (12), ladite échelle de température (5) et ledit symbole de référence (7) pouvant être déplacés l'une par rapport à l'autre par un mouvement desdits moyens prédéfinis et l'un de ladite échelle de température (5) et dudit symbole de référence (7) pouvant être ajusté par rapport auxdits moyens prédéfinis, **caractérisé en ce que** ladite échelle de température (5) peut être déplacée indépendamment dudit symbole de protection contre le gel (12).

2. Actionneur selon la revendication 1, **caractérisé en ce que** lesdits moyens prédéfinis comprennent un élément rotatif (3), ladite échelle de température (5) étant agencée sur un support (6) fixé audit élément rotatif (3).

3. Actionneur selon la revendication 2, **caractérisé en ce que** ledit support (6) se présente sous la forme d'une bague, en particulier d'une bague fermée.

4. Actionneur selon la revendication 2 ou 3, **caractérisé en ce que** ledit support (6) est verrouillé de manière libérable sur ledit élément rotatif (3) dans une direction de rotation dudit élément rotatif (3).

5. Actionneur selon la revendication 4, **caractérisé en ce que** ledit support (6) et ledit élément rotatif (3) sont connectés l'un à l'autre dans une direction circonférentielle au moyen d'un verrouillage positif.

6. Actionneur selon la revendication 5, **caractérisé en ce que** ledit verrouillage positif est désengagé par un mouvement du support (6) et de l'élément rotatif (3) l'un par rapport à l'autre dans une direction axiale dudit élément rotatif (3).

7. Actionneur selon la revendication 6, **caractérisé en ce que** ledit support (6) repose contre une butée (11) dans un état verrouillé, ladite butée (11) étant de préférence sous la forme d'une saillie en forme de bague et étant particulier en affleurement avec ledit support (6).

8. Actionneur selon l'une quelconque des revendications 5 à 7, **caractérisé en ce que** ledit support (6) comprend une paire de dents internes (14) et ledit élément rotatif (3) comprend une paire de dents externes (15), lesdites dents internes (14) et lesdites dents externes (15) formant ensemble ledit verrouillage positif.

9. Actionneur selon la revendication 8, **caractérisé en ce que** lesdites dents externes (15) sont agencées dans une gorge (13) dans une surface circonférentielle dudit élément rotatif (3), lesdites dents internes (14) s'étendant dans ladite gorge (13).

10. Actionneur selon la revendication 9, **caractérisé en ce que** dans ladite direction axiale, lesdites dents externes (15) sont plus petites que ladite gorge (13) d'au moins une longueur axiale desdites dents internes (14).

11. Actionneur selon l'une quelconque des revendications 8 à 10, **caractérisé en ce que** ladite paire de dents internes (14) et/ou ladite paire de dents externes (15) sont divisées en au moins deux groupes de dents.

12. Actionneur selon la revendication 1, **caractérisé en ce que** ledit symbole de protection contre le gel (12) est fixé sur ledit élément rotatif (3).

13. Actionneur selon la revendication 12, **caractérisé en ce que** ledit symbole de protection contre le gel (12) est positionné hors dudit support (6) dans la direction axiale.

14. Actionneur selon la revendication 13, **caractérisé en ce que** ledit symbole de protection contre le gel (12) est positionné dans la direction axiale à l'intérieur dudit support (6), ledit support (6) comprenant une fenêtre (16) dans la zone dudit symbole de protection contre le gel (12).
